(19) Europäisches Patentamt
European Patent Office
Office européen des brevets

(11) **EP 4 050 682 A1**

(12) **EUROPEAN PATENT APPLICATION**
published in accordance with Art. 153(4) EPC

(43) Date of publication:
**31.08.2022 Bulletin 2022/35**

(21) Application number: **19950103.2**

(22) Date of filing: **29.10.2019**

(51) International Patent Classification (IPC):
*H01M 4/36* (2006.01)      *H01M 4/38* (2006.01)
*H01M 4/62* (2006.01)      *H01M 4/587* (2010.01)
*H01M 10/052* (2010.01)    *C01B 33/02* (2006.01)
*C01B 32/05* (2017.01)

(52) Cooperative Patent Classification (CPC):
Y02E 60/10

(86) International application number:
**PCT/KR2019/014403**

(87) International publication number:
**WO 2021/080066 (29.04.2021 Gazette 2021/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2019 KR 20190131502**

(71) Applicant: **Grapsil Co., Ltd.**
**Chungcheongnam-do 31056 (KR)**

(72) Inventor: **KIM, Huijin**
**Asan-si Chungcheongnam-do 31463 (KR)**

(74) Representative: **Cabinet Beaumont**
**4, Place Robert Schuman**
**B.P. 1529**
**38025 Grenoble Cedex 1 (FR)**

(54) **ANODE ACTIVE MATERIAL COMPRISING SILICON COMPOSITE FORMED BY NETWORK OF CONDUCTIVE FIBERS, PREPARATION METHOD THEREFOR, AND LITHIUM SECONDARY BATTERY COMPRISING SAME**

(57) Proposed is a high-capacity anode active material including a primary silicon composite formed such that silicon nanoparticles are dispersed on a first amorphous carbon matrix and a secondary silicon composite formed such that the primary silicon composite is assembled by a network of conductive fibers on a second amorphous carbon matrix. With this structure, contact between the silicon nanoparticles and an electrolyte is prevented so that the anode active material has high capacity and conductivity. A lithium secondary battery including the anode active material is also proposed.

FIG. 1

**Description**

**Technical Field**

The present invention relates to a high-capacity anode active material containing a silicon composite formed by a network of conductive fibers, thereby having excellent conductivity. The present invention also relates to a method for preparing the anode active material. In addition, the present invention relates to a lithium secondary battery including the anode active material, thereby exhibiting an increased lifespan and improved output characteristics and being highly safe.

**Background Art**

Lithium secondary batteries are widely used as power sources for mobile electronic devices, including mobile phones and are finding more applications because large devices such as electric vehicles increasingly use the lithium secondary batteries.

Meanwhile, most of the currently commercially available lithium secondary batteries use a carbon-based material as an anode active material. Graphite exhibits highly reversible charge/discharge behaviors due to the uniaxial orientation of a graphite layer, thereby having good lifespan characteristics. In addition, since graphite exhibits a similar potential lithium metal, it is possible to obtain high-energy batteries when graphite is used in combination with a lithium metal cathode in a battery. However, despite these advantages, the low theoretical capacity (372 mAh/g) of graphite is an obstacle in increasing applications even at the present time at which high-capacity batteries are required.

Accordingly, there is an attempt to use a metal such as Si, Sn, and Al which exhibit a high capacity as a material to replace the existing carbon-based anode active material. However, these metals exhibit repeated large volume changes during the lithiation and delithiation of lithium ions, resulting in pulverization thereof and the loss of electrical conduction paths, thereby leading to a short cycle life and overall cell performance deterioration.

To solve this problem, many efforts have been made. For example, various carbon materials are simply mixed with silicon (Si), fine powdery silicon is chemically fixed on the carbon surface by a silane coupling agent, or amorphous carbon is deposited on the silicon surface through chemical vapor deposition (CVD) or the like.

However, in the case where a carbon material is simply mixed with silicon, carbon is liberated from silicon while Si undergoes large volume expansion and contraction during charging and discharging, which leads to reduction in electrical conductivity, resulting in a significant decrease in lifespan.

On the other hand, in the case where fine powdery silicon is chemically fixed on the carbon surface through CVD or using a coupling agent such as silane, the duration of bonding provided by the silane coupling agent or CVD is not so long, and the cycle life decreases with increase in the number of charging and discharging cycles. Moreover, there is a problem in that it is difficult to obtain a reliable anode material due to difficulty in attaining uniform physical and chemical bonding.

Despite these various attempts, there remains the problem that electrodes are damaged due to the expansion of silicon during discharging.

Therefore, there is an increasing need for a high-capacity anode active material having excellent electrical conductivity and a lithium secondary battery having a long cycle life and good output characteristics and being highly safe by employing such an anode active material.

**Disclosure**

**Technical Problem**

The present invention is intended to solve the problems of the existing technology described above and the technical problems that have not yet been solved.

Specifically, an objective of the present invention is to provide a high-capacity anode active material having good electrical conductivity by including a silicon composite formed by a network of conductive fibers.

Another objective of the present invention is to provide a method of preparing the anode active material.

A further objective of the present invention is to provide a lithium secondary battery having a long cycle life and good output characteristics and being highly safe by employing the anode active material.

**Technical Solution**

The present invention provides an anode active material including:

a primary silicon composite having a structure in which silicon nanoparticles are dispersed on a first amorphous carbon matrix; and

a secondary silicon composite formed by a mechanism in which the primary silicon composite is assembled on a second amorphous carbon matrix by a network of carbon fibers.

The silicon nanoparticles may include amorphous silicon nanoparticles having an average particle size of 10 to 200 nm or crystalline silicon nanoparticles having a crystal size that is larger than 0 nm and is not larger than 30 nm, or both.

The primary silicon composite may have an average particle size of 0.2 to 1.3 $\mu$m.

The secondary silicon composite may have an average particle size of 1 to 80 $\mu$m.

The network of the conductive fiber at least partially may come into contact with the primary silicon composite to form an electrical conduction path.

The network of the conductive fiber may be at least partially exposed on a surface on the secondary silicon composite.

The conductive fiber may be at least one selected from the group consisting of graphene, carbon fiber, carbon nanotubes, conductive polymer fiber, and metal filaments.

The electrical conductivity of the second amorphous carbon may be higher greater than that of the first amorphous carbon.

The present invention also provides a method of preparing an anode active material, the method including:

mixing a first amorphous carbon precursor with silicon nanoparticles and performing primary heat treatment on the mixture to prepare a primary silicon composite; and

mixing the primary silicon composite, a second amorphous carbon precursor, and a conductive fiber and then performing secondary heat treatment on the mixture to prepare a secondary silicon composite that is formed by a mechanism in which the primary silicon composite is assembled by a network of conductive fibers.

The first amorphous carbon precursor may be added in an amount of 50 to 200 parts by weight per 100 parts by weight of the silicon nanoparticles.

The second amorphous carbon precursor may be added in an amount of 50 to 200 parts by weight per 100 parts by weight of the silicon nanoparticles.

The conductive fiber may be added in an amount of 20 to 80 parts by weight per 100 parts by weight of the silicon nanoparticles.

The primary heat treatment and the secondary heat treatment may be performed in a temperature range of 800°C to 1200°C for a duration of 1 to 3 hours

The present invention provides a lithium secondary battery including the anode active material.

**Advantageous Effects**

The anode active material according to the present invention may include silicon nanoparticles enabling high capacity, thereby improving the lifespan characteristics of a lithium secondary battery.

In addition, since the anode active material according to the present invention includes the secondary silicon composite formed by assembling the primary silicon composite, the lithium ion movement paths of the anode active material increase, resulting in improvement in output characteristics.

In addition, according to the present invention, although silicon nanoparticles repeatedly experience volume changes (i.e., expansions and contractions) due to the lithiation and delithiation of lithium ions, since the second amorphous carbon matrix and the first amorphous carbon matrix including the silicon nanoparticles that are well dispersed serve as a buffering member to absorb stress attributable to the volume changes, damage to electrodes can be minimized, and the contact between the silicon nanoparticles and the electrolyte can be inhibited. Because of this, safe lithium secondary batteries can be obtained.

In addition, according to the present invention, since the primary silicon composite is assembled by a network of conductive fibers to form an electrical conduction path, the lithium secondary battery has a high capacity and excellent initial efficiency.

**Description of Drawings**

FIG. 1 is a schematic view illustrating a cross-section of an anode active material according to one embodiment of the present invention;

FIG. 2 is an SEM image of a primary silicon composite according to Experimental Example 1;

FIG. 3 is an SEM image of a secondary silicon composite according to Experimental Example 1;

FIG. 4 is an SEM image of an anode active material of Comparative Example 1 in Experimental Example 1;

FIG. 5 is data of particle sizes of a secondary silicon composite in Experimental Example 2; and

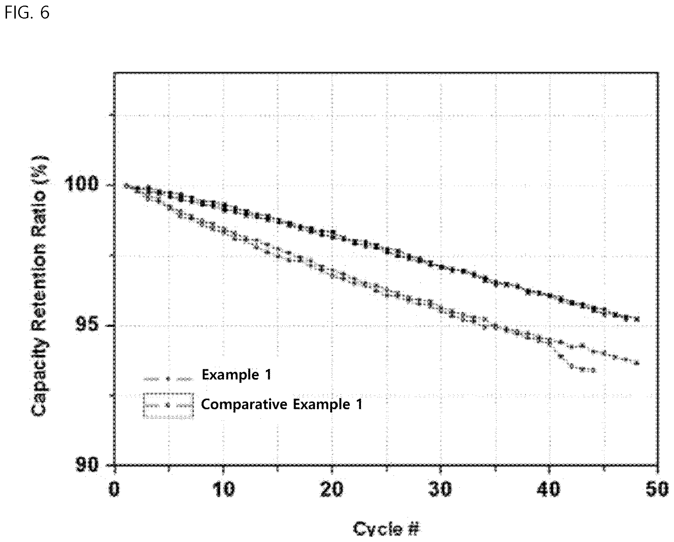

FIG. 6 is a graph showing changes in the capacity retention ratio according to the number of cycles in Experimental Example 4.

**Best Mode**

**Anode Active Material**

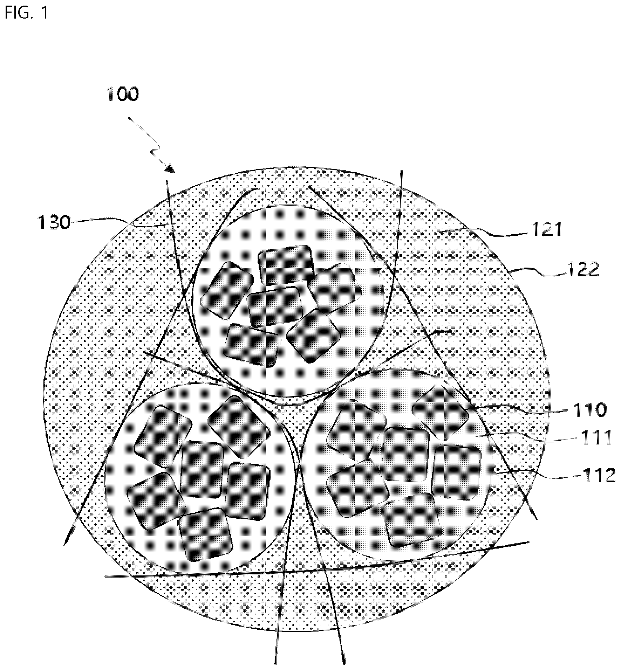

FIG. 1 is a schematic cross-sectional view of an anode active material according to one embodiment of the present invention, but the structure of the anode active material is not limited thereto.

Referring to FIG. 1, the anode active material includes: a primary silicon composite 112 structured such that silicon nanoparticles 110 are dispersed on a first amorphous carbon matrix 111; and a secondary silicon composite 100 formed by a mechanism in which the primary silicon carbon 112 is assembled on a second amorphous carbon matrix 121 by a network of conductive fibers 130.

In the present invention, the term "the first amorphous carbon matrix 111" means that the first amorphous carbon is positioned in the form of a continuous phase.

In the present invention, the term "primary silicon composite 112" refers to particles formed such that one or more silicon nanoparticles 110 are continuously or discontinuously distributed on the first amorphous carbon matrix 111 to look like a single particle. Here, the surfaces of the silicon nanoparticles are surrounded by the first amorphous carbon.

In the present invention, "second amorphous carbon matrix 121" means that the second amorphous carbon is positioned in the form of a continuous phase.

In the present invention, the "secondary silicon composite 100" refers to the particles formed such that the primary silicon composite 112 is continuously or discontinuously distributed on the second amorphous carbon matrix 121 to look like a single particle. That is, the surface of the primary silicon composite 112 is surrounded by the second amorphous carbon.

In the present invention, in the expression "secondary silicon composite 100 formed by a mechanism in which the primary silicon composite 112 is assembled by a network of conductive fibers 130" means that the conductive fibers 130 act as a support on which a plurality of lumps of the primary silicon composite 112 is fixed to form the secondary silicon composite 100.

Silicon exhibits a theoretical capacity of about 3,600 mA/g which is higher than those of conventional carbon-based anode materials but has a problem that it exhibits a large volume change during lithiation and delithiation of lithium ions, resulting in pulverization of the silicon and the loss of an electrical conduction path which leads to deterioration in the lifespan characteristics.

According to the present invention, even though the contraction and expansion of silicon nanoparticle 110 are repeated due to the lithiation and delithiation of lithium ions during the charging and discharging process of the battery, the nanoparticles exhibiting high dispersibility and the first and second amorphous carbon matrices 111 and 121 surrounding the nanoparticles act as a buffer to minimize the volume change. In addition, since the anode active material of the present invention has good durability due to high mechanical strength thereof, when the anode active material of the present invention is used in a battery manufacturing process such as rolling, damage to the electrode can be minimized. Therefore, the contact between the silicon nanoparticles 110 and the electrolyte even during the repeated battery charging and discharging cycles is prevented, and thus the safety and lifespan characteristics of the battery are improved.

On the other hand, when conductive components are not evenly distributed in an anode active material layer, that is, the conductive components agglomerate, a dead space in which electrons cannot move may be present in the anode active material layer. This results in reduction in electrical conductivity and increase in electrical resistance of the electrode, thereby leading to deterioration in output characteristics.

According to the present invention, in the secondary silicon composite 100 to which the primary silicon composite 112 is assembled, fine pores formed during the assembly process act as passages for lithium ions to move. Therefore, the output characteristics of the lithium secondary battery are improved.

Moreover, since the shape of the primary silicon composite 112 is maintained by the network of the conductive fibers 130, and the secondary silicon composite 100 is formed in the assembling process, the lithium secondary battery using the anode active material of the present invention has high capacity and outstanding initial efficiency.

According to the present invention, the silicon nanoparticles 110 are dispersed on the first amorphous carbon matrix 111 in a form that the nanoparticles 110 are separated from each other. If agglomeration occurs, only a few particles may aggregate.

The silicon nanoparticles 110 may be at least one of amorphous silicon nanoparticles and crystalline silicon nanoparticles.

The amorphous silicon nanoparticles may have an average particle size of 10 to 200 nm. When the average particle size is smaller than the lower limit of the range, the process efficiency decreases. Conversely, when the average particle diameter is excessively large and exceeds the upper limit of the range, it is undesirable because pulverization (fine-graining) and contact with the electrolyte may occur during charging and discharging.

Heat treatment is controlled such that the crystalline silicon nanoparticles cannot grow to have a crystal size larger than 30 nm. Preferably, the heat treatment is controlled such that the crystal size can be within the range of from above 0 nm to 30 nm. When the crystal size is within the range, lithium secondary batteries having a high capacity and good initial efficiency may be realized.

The first amorphous carbon may be added in an amount of 50 to 200 parts by weight per 100 parts by weight of the silicon nanoparticles 110. When the amount of the first amorphous carbon is too large to the extent exceeding the upper limit of the range, the resistance may be increased, and thus the output characteristics are deteriorate. The excessively large amount of the first amorphous carbon is not desirable because the pulverization of the silicon nanoparticles may severely occur during charging and discharging of the battery. Specifically, the amount of the first amorphous carbon may be 80 to 100 parts by weight per 100 parts by weight of the silicon nanoparticle 110.

The primary silicon composite 112 is a material structured such that one or more silicon nanoparticles 110 are continuously or discontinuously distributed on the first amorphous carbon matrix 111 so as to look like one or more particles having an average particle size of 0.2 to 1.3 $\mu$m. When the average particle size is excessively small, process efficiency may be deteriorated. Conversely, when the average particle size is excessively large, resistance increases due to an increase in the lithium ion path, resulting in deterioration in charging and discharging efficiency. Therefore, the excessively large particle size is not also desirable. The average particle size may be in a range of 0.3 to 1 $\mu$m.

The conductive fibers 130 of the secondary silicon composite 110 may act as a support so that the primary silicon composites 112 may gather on the support. The average particle size may be in a range of 1 to 80 $\mu$m.

When the average particle size is excessively small, process efficiency may be deteriorated. When the average particle diameter is excessively large, resistance may increase due to an increase in the number of lithium ion paths, resulting in deterioration in charging and discharging efficiency. Specifically, the average particle size may be in a range of 5 to 15 $\mu$m.

Since at least a portion of the network of the conductive fiber 130 is in contact with the surface of the primary silicon composite 112 to form an electrical conduction path, electrical conductivity may be increased and resistance may be reduced. That is, the output characteristics may be improved. Moreover, the conductive fibers 130 may have an effect of suppressing a change in volume of the primary silicon composite 112 during charging and discharging.

The network of the conductive fibers 130 may be positioned in an at least partially positioned manner on the surface of the secondary silicon composite 100, thereby imparting electrical conductivity to the anode active material.

For example, at least 5% to 20% by volume of the total conductive fibers 130 may be positioned in an exposed manner on the surface of the secondary silicon composite 100. When excessively exposed to exceed the volume range, it is not preferable because the intended effect of the present invention cannot be exhibited. That is, the volume range must be satisfied to exhibit the function of supporting the primary silicon composite 112 and the electrical conductivity.

The conductive fiber 130 exhibits conductivity and there is no limitation for the material thereof if it can be electrically connected to the primary silicon composite 112. For example, the conductive fiber 130 may be one or more selected from the group consisting of graphene, carbon fiber, carbon nanotube, conductive polymer fiber, or metal filament. The metal may be stainless steel, aluminum, nickel, copper, titanium, platinum, gold, silver, ruthenium, tantalum, niobium, hafnium, zirconium, vanadium, indium, cobalt, tungsten, tin, beryllium, molybdenum, any alloy of these examples, or a laminate of some of these metals.

The length and cross-sectional diameter of the conductive fiber 130 may be determined depending on the particle sizes of the primary and secondary silicon composites 112 and 100. For example, the diameter of the cross-section of the conductive fiber 130 may be in a range of 10 to 500 nm, and the length may be in a range of 0.1 to 100 $\mu$m. The diameter of the conductive fiber 130 may be uniform or variable along a longitudinal direction. At least a portion of the long axis of the conductive fiber 130 may be straight, curved, bent, or branched.

The second amorphous carbon may be added in an amount of 50 to 200 parts by weight per 100 parts by weight of the silicon nanoparticles 110. When the amount of the second amorphous carbon is out of the above range and specifically exceeds the upper limit of the range, the resistance may be increased and thus the output characteristics may be deteriorated. When the amount of the primary silicon composite 112 is excessively large, it is not preferable because the pulverization phenomenon may intensify in the charging/discharging process.

The amount of the conductive fibers 130 may be 20 to 80 parts by weight per 100 parts by weight of the silicon nanoparticles 110. An insufficient amount of the conductive fibers makes it difficult for the primary silicon composites 112 maintain the assembled shape, and an excessively large amount of the conductive fibers not preferable in terms of increase in resistance which may lead to deterioration in output characteristics.

As the material of the first amorphous carbon and the second amorphous carbon, any amorphous carbon known in the art can be used without limitation. For example, any one or a combination of two or more ones selected from the group consisting of soft carbon, hard carbon, pitch carbide, mesophase pitch carbide, and calcined coke may be used.

The conductivity of each of the first amorphous carbon and the second amorphous carbon may vary depending on the material used, the preparation method thereof, the processing method therefor, etc. In the present invention, the conductivity of the second amorphous carbon may be higher than the conductivity of the first amorphous carbon. As described above, since the network of the conductive fiber 130 forms an electrical conduction path so that at least a portion thereof is exposed on the surface of the secondary silicon composite 100, when the conductivity of the second amorphous carbon is relatively large, the output characteristics of the lithium secondary battery may be improved.

**Method of Preparing Anode Active Material**

On the other hand, the present invention provides a method of preparing the anode active material, the method including:

preparing a primary silicon composite 112 by mixing a first amorphous carbon precursor and silicon nanoparticles 110 and then performing a primary heat treatment on the mixture; and

The primary silicon composites 112, the second amorphous carbon precursor, and the conductive fibers 130 are mixed, and the mixture undergoes secondary heat treatment so that the primary silicon composites 112 are assembled by a network of the conductive fibers 130, thereby forming the secondary silicon composite 100.

During the primary heat treatment, the first amorphous carbon precursor is softened and carbonized to form the first amorphous carbon matrix 111 while covering the silicon nanoparticles 110, thereby forming the primary silicon composite 112.

The particle sizes and various characteristics of the silicon nanoparticles 110, the primary silicon composite 112, the conductive fiber 130, and the secondary silicon composite 100, have been described, thus a redundant description thereabout will be omitted below.

However, an excessively small particle size of the primary silicon composite 112 may lower the process efficiency. On the other hand, an excessively large particle size may increase the resistance due to the increase of the lithium ion path and thus lower the charging and discharging efficiency. Therefore, the excessively large particle size is not preferable. Therefore, in the present invention, the process of adjusting the average particle size by pulverizing the primary silicon composite 112 may be performed. Specifically, before mixing the primary silicon composite 112, the second amorphous carbon precursor, and the conductive fiber 130, a process of pulverizing the primary silicon composite 112 to a particle size of 0.2 to 1.3 $\mu$m, more preferably a particle size of 0.3 to 1 $\mu$m, may be performed.

The first amorphous carbon precursor is a carbon precursor. The carbon precursor is one or more selected from the group consisting of coal-based pitch, mesophase pitch, petroleum-based pitch, coal-based oil, petroleum-based heavy oil, organic synthetic pitch, and polymer resin such as phenol resin, furan resin, or polyimide resin.

The amount of the first amorphous carbon precursor may be 50 to 200 parts by weight per 100 parts by weight of the silicon nanoparticles 110. When the amount of the first amorphous carbon precursor is excessively large to be outside the above range, the resistance may be increased and thus the output characteristics may be deteriorated. When the amount of the silicon nanoparticles 110 is excessively large, it is not preferable because the pulverization phenomenon may intensify in the charging/discharging process. Specifically, the amount of the first amorphous carbon precursor may be 80 to 100 parts by weight per 100 parts by weight of the silicon nanoparticles 110.

Dry mixing or wet mixing may be used for the mixing. The mixing method is not particularly limited in the present invention, but dry mixing is preferable.

As the dry mixing method, a drying method used commonly used for powder preparation may be used. Mechanical milling may be used for uniform particle mixing. Mechanical milling is a method of pulverizing a sample while applying pre-mechanical energy to the sample. For example, a roll mill, a ball mill, a Mechanofusion, or a jet mill may be used. Specifically, a ball mill using high impact energy efficiently may be used.

Mechanical milling treatment conditions can be appropriately adjusted according to the equipment used. The faster the rotation speed, the faster the product is produced, and the longer the rotation time, the higher the rate of conversion from the raw material to the target product. For example, in the case of using a common ball mill, the mixing is preferably performed under the conditions in which the rotation speed is in a range of 1000 to 3000 rpm and the mixing time is in a range of 0.5 to 5 minutes. More specifically, the rotation speed may be in a range of 1500 to 2500 rpm, and the mixing time may be in a range of 1 to 3 minutes.

The primary heat treatment may be performed at a temperature in a range of 800°C to 1200°C for 1 to 3 hours.

When the condition of the primary heat treatment is out of the above range, the amorphous carbon is not sufficiently softened. Therefore, it is difficult to position the amorphous carbon on the surface of the silicon nanoparticles 110 and the efficiency of the manufacturing process may be lowered. Therefore, the primary heat treatment at a temperature outside the range is not preferable.

During the secondary heat treatment, the second amorphous carbon precursor is softened and carbonized to form the second amorphous carbon matrix 121 made of the second amorphous carbon while covering the primary silicon composite 112, thereby forming the secondary silicon composite 100.

The second amorphous carbon precursor is one or more carbon precursors selected from the group consisting of coal-based pitch, mesophase pitch, petroleum-based pitch, coal-based oil, petroleum-based heavy oil, organic synthetic pitch, and polymer resin such as phenol resin, furan resin, or polyimide resin.

The amount of the second amorphous carbon precursor may be 50 to 200 parts by weight per 100 parts by weight of the silicon nanoparticles 110. When the amount of the second amorphous carbon precursor is excessively large to be outside the above range, the resistance may be increased and thus the output characteristics may be deteriorated. When the amount of the primary silicon composite 112 is excessively large, it is not preferable because the pulverization phenomenon may intensify in the charging/discharging process.

Dry mixing or wet mixing may be used for the mixing. The mixing method is not particularly limited in the present invention, but dry mixing is preferable.

As the dry mixing method, a common method for preparing a powder mixture may be used. Mechanical milling may be used for uniform particle mixing. Mechanical milling is a method of pulverizing a sample while applying premechanical energy to the sample. For example, a roll mill, a ball mill, a Mechanofusion, or a jet mill may be used. Specifically, a ball mill using high impact energy efficiently may be used.

Mechanical milling treatment conditions can be appropriately adjusted according to the equipment used. The faster the rotation speed, the faster the product is produced, and the longer the rotation time, the higher the rate of conversion from the raw material to the target product. For example, in the case of using a common ball mill, the mixing is preferably performed under the conditions in which the rotation speed is in a range of 1000 to 3000 rpm and the mixing time is in a range of 0.5 to 5 minutes. More specifically, the rotation speed may be in a range of 1500 to 2500 rpm, and the mixing time may be in a range of 1 to 3 minutes.

The secondary heat treatment may be performed at a temperature in a range of 800°C to 1200°C for 1 to 3 hours. When the condition of the primary heat treatment is out of the above range, the amorphous carbon is not sufficiently softened. Therefore, it is difficult to position the amorphous carbon on the surface of the primary silicon composite 112 and the efficiency of the manufacturing process may be lowered. Therefore, the secondary heat treatment at a temperature outside the range is not preferable.

On the other hand, the amount of the conductive fibers 130 may be 20 to 80 parts by weight per 100 parts by weight of the silicon nanoparticles 110. An insufficient amount of the conductive fibers makes it difficult for the primary silicon composites 112 maintain the assembled shape, and an excessively large amount of the conductive fibers not preferable in terms of increase in resistance which may lead to deterioration in output characteristics.

The conductivity of each of the first amorphous carbon and the second amorphous carbon may vary depending on the material used, the preparation method thereof, the processing method therefor, etc. In the present invention, the conductivity of the second amorphous carbon may be higher than the conductivity of the first amorphous carbon. As described above, since the network of the conductive fiber 130 forms an electrical conduction path so that at least a portion thereof is exposed on the surface of the secondary silicon composite 100, when the conductivity of the second amorphous carbon is relatively large, the output characteristics of the lithium secondary battery may be improved.

## Lithium Secondary Battery

The present invention provides a lithium secondary battery including the anode active material.

The lithium secondary battery may include a cathode containing a cathode active material, an anode containing the anode active material, and an electrolyte.

The cathode is formed by applying a cathode mixture including a cathode active material to a current collector, and the cathode mixture may further include a binder and a conductive material, if necessary.

The cathode active material is, for example, a lithium metal oxide (0<x<1, 0<y<1) such as $LiNi_{0.8-x}Co_{0.2}AlxO_2$, $LiCo_xMn_yO_2$, $LiNi_xCo_yO_2$, $LiNi_xMn_yO_2$, $LiNi_xCo_yMn_zO_2$, $LiCoO_2$, $LiNiO_2$, $LiMnO_2$, $LiFePO_4$, $LiCoPO_4$, $LiMnPO_4$, or $Li_4Ti_5O_{12}$. Alternatively, the cathode active material may be a chalcogenide such as $Cu_2Mo_6S_8$, FeS, CoS, or MiS. Further alternatively, the cathode active material may be any one selected from oxides, sulfides, and halides of scandium, ruthenium, titanium, vanadium, molybdenum, chromium, manganese, iron, cobalt, nickel, copper, zinc, etc. More specifically, $LiNi_{0.8}Co_{0.1}Mn_{0.1}O_2$, $TiS_2$, $ZrS_2$, $RuO_2$, $Co_3O_4$, $Mo_8S_8$, and $V_2O_5$, etc. may be used as the cathode active material, but the cathode active material is not limited thereto.

The shape of the cathode active material is not particularly limited. The cathode active material may be in the form of particulate. For example, the shape of the cathode active material may be a spherical shape, an oval shape, or a rectangular parallelepiped shape. The average particle size of the cathode electrode active material may be in the range of 1 to 50 $\mu$m, but is not limited thereto. The average particle size of the cathode active material can be obtained by measuring the sizes of the particles of the active material with a scanning electron microscope (SEM), and calculating an average value thereof.

The binder is not particularly limited. A fluorine-containing binder such as polyvinylidene fluoride (PVDF) and polytetrafluoroethylene (PTFE) may be used, but the binder is not limited thereto.

The content of the binder is not particularly limited as long as the binder can bind the cathode active material. The content may be in the range of 0% to 10% by weight with respect to the total weight of the cathode.

The conductive material is not particularly limited as long as the conductivity of the cathode can be improved. For example, nickel powder, cobalt oxide, titanium oxide, carbon, and the like may be used. The carbon, specifically, may be any one or a combination of two or more selected from the group consisting of Ketjen black, acetylene black, furnace black, graphite, carbon fiber, and fullerene.

The content of the conductive material may be determined in consideration of other battery conditions such as the type of the conductive material. For example, the content may be in the range of 1% to 10% by weight with respect to the total weight of the cathode.

The thickness of a layer made of the cathode mixture including the cathode active material, the binder, and the conductive material may be, for example, in the range of 0.1 to 1000 $\mu$m when the cathode mixture is applied on the current collector.

In some cases, in the present invention, the cathode mixture may include 0.1% to 60% by weight, specifically 10% to 50% by weight, of a solid electrolyte with respect to the total weight of the cathode mixture.

The thickness of the layer of the cathode mixture may be, for example, 0.1 to 1000 $\mu$m.

The material of the cathode current collector is not particularly limited as long as it has high conductivity without causing chemical change in the battery. For example, stainless steel, aluminum, nickel, titanium, or fired carbon may be used. Alternatively, a base member of the cathode current collector is made of stainless steel, aluminum, nickel, titanium, or fired carbon, and the surface of the base member may be treated with carbon, nickel, titanium, silver, or the like. In addition, the cathode current collector may take an arbitrary form such as a film, a sheet, a foil, a net, a porous body, a foam, or a non-woven body, and the surface of such a cathode current collector may have fine irregularities.

An anode includes an anode current collector and an anode mixture applied on the anode current collector, in which the anode mixture includes an anode active material. The anode active material may be the anode active material proposed by the present invention. However, in some cases, metal oxide, metal, lithium composite oxide, crystalline carbon, amorphous carbon, etc. may be used together. The anode mixture may further include a binder and a conductive material that are the same as described above, if necessary.

The material of the anode current collector is not particularly limited as long as it has conductivity and does not cause chemical change in the battery. For example, copper, stainless steel, aluminum, nickel, titanium, or fired carbon may be used. Alternatively, a base member of the anode current collector is made of copper or stainless steel, and carbon, nickel, titanium, silver, or the like may be formed on the copper or stainless steel base member. In addition, similarly to the cathode current collector, the anode current collector may take an arbitrary form such as a film, a sheet, a foil, a net, a porous body, a foam, and a non-woven body, and the surface of such an anode current collector may have fine irregularities.

The electrolyte is composed of an organic solvent and an electrolyte material.

The organic solvent is not particularly limited if it is a commonly used one. For example, one or more materials selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxy ethane, diethoxyethane, vinylene carbonate, sulfolane, gamma-butyrolactone, propylene sulfite, and tetrahydrofuran may be used.

There is no limitation as long as a lithium salt that may be included as the electrolyte is commonly used. For example, as an anion of the lithium salt, one or more types of anions selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used.

A battery structure is formed by arranging a separator between the cathode and the anode, and the battery structure is wound or folded, and is then placed in a cylindrical battery case or a prismatic battery case. Next, the electrolyte is injected into the battery case to complete a secondary battery. Alternatively, a lithium secondary battery is completed by stacking the battery structures in the form of a bi-cell structure, impregnating the bi-cell structure with the electrolyte, and sealing the obtained result in a pouch.

Although a description will be made with reference to the following examples, the following examples are for the purpose of illustrating the present invention, and the scope of the present invention is not limited thereto.

[Example 1]

As a raw material of a first amorphous carbon, a pitch having a carbonization yield of 40% and silicon nanoparticles having an average particle size of 100 nm were mixed in a weight ratio of 4:6, followed by a purification process and high temperature treatment was performed at 1000°C for 1 hour in an electric reactor in a nitrogen atmosphere. During the heat treatment, the pitch was softened and carbonized to form a first carbon matrix covering the silicon nanoparticle, and then pulverization was performed to form a primary silicon composite having an average particle size of 0.2 to 1.3 $\mu$m.

The primary silicon composite, pitch having a carbonization yield of 60% a raw material of second amorphous carbon, and carbon fiber were mixed in a weight ratio of 6:3:1, followed by a purification process. Next, high-temperature heat treatment was performed at 975°C for 2 hours in an electric reactor in a nitrogen atmosphere. During the heat treatment, the pitch was softened and carbonized to form a second carbon matrix covering the primary silicon composite, and the primary silicon composite was assembled by a network of carbon fibers to form a secondary silicon composite. An anode active material made of the secondary silicon composite was prepared.

<Comparative Example>

A silicon-carbon composite (Si/C) having a D50 of 12.2 $\mu$m was prepared as an anode active material.

<Experimental Example 1>

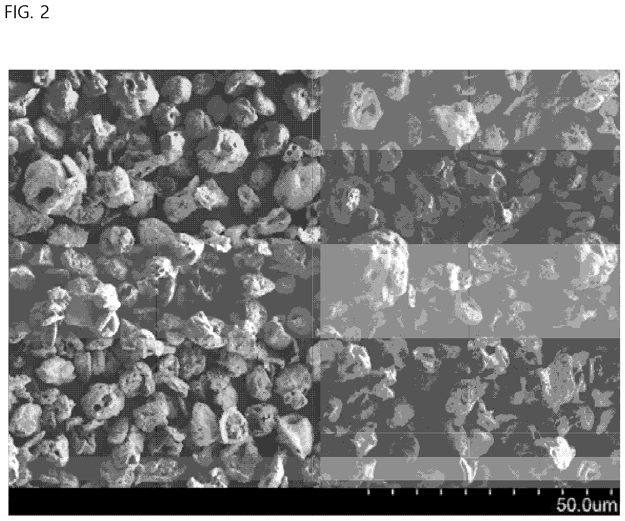

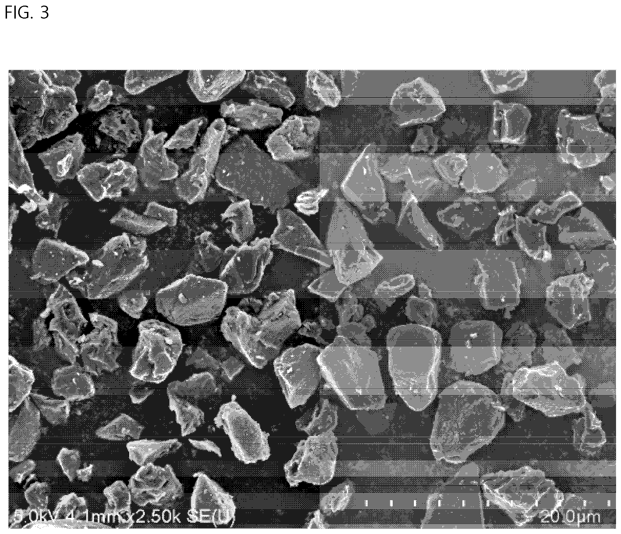

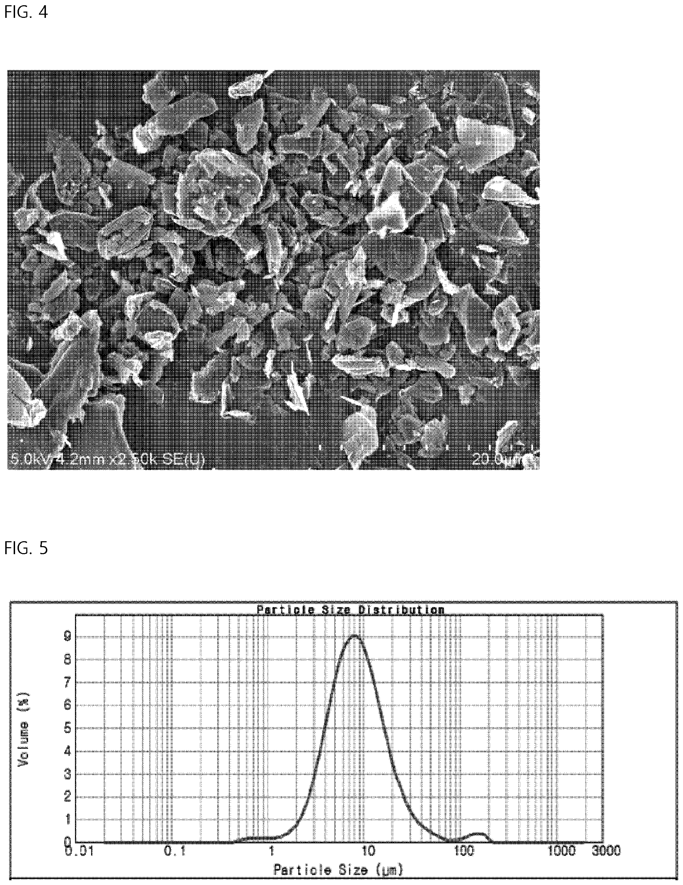

An SEM image of the unpulverized primary silicone composite prepared in Example 1 is shown in FIG. 2 below. In addition, SEM images of the secondary silicon composite prepared in Example 1 and the anode active material of Comparative Example 1 are shown in FIGS. 3 and 4, respectively.

Referring to FIG. 2 below, the unpulverized primary silicone composite prepared in Example 1 had an average particle size of about 8 $\mu$m. When the average particle size of the primary silicon composite is excessively large, the resistance increases due to the increase in lithium ion paths, resulting in deterioration in charging/discharging efficiency. Therefore, it is preferable that the primary silicon composite is pulverized before the use thereof.

Referring to FIG. 3, the secondary silicone composite prepared in Example 1 had a uniform particle shape, and aggregation between particles was minimized. However, in the case of the silicone composite according to Comparative Example 1, the particles are not evenly distributed, and the particles are aggregated.

<Experimental Example 2>

Particle size data of the secondary silicone composite prepared in Example 1 is shown in FIG. 5 below.

Referring to FIG. 5, the D50 of the secondary silicon composite prepared in Example 1 is 8.256 $\mu$m.

<Experimental Example 3>

Anodes were prepared by cutting anode plates prepared by using each of the anode active materials according to Example 1 and Comparative Example 1 into a circular shape having an area of 1.4875 cm$^2$. Cathodes were prepared by cutting a lithium metal thin-film into a circular shape having an area of 1.4875 cm$^2$. Here, in the design of the anode plate, the rolling density was 1.55 g/cc, the current density was 2.95 mA/cm$^2$, and the electrode plate capacity was 510 mAh/g. A porous polyethylene separator is interposed between the cathode and the anode, and 0.5 wt% of vinylene carbonate is dissolved in a mixed solution in which methyl ethyl carbonate (EMC) and ethylene carbonate (EC) are mixed in a volume ratio of 7: 3. Next, a lithium coin half-cell was prepared by injecting an electrolyte in which LiPF$_6$ was dissolved in a concentration of 1M.

The thickness change rate, discharge capacity, initial efficiency, capacity retention rate of the lithium coin half cell of Example 1 and the discharge capacity and initial efficiency of the lithium half cell of Comparative Example 1 were measured. The measurement results are shown in Table 1 below.

In the first cycle (formation cycle) and the second cycle, the half cells were charged and discharged at 0.1 C (standard cycle). In the third to forty ninth cycles, the half cells were charged at 0.5 C and discharged at 1.0 C. In the case of the fifth cycle, the cycle was finished in a charging state (i.e., state in which lithium is present in the anode). In this state, the cells were disassembled, and the thickness of each cell was measured. The change rate of the electrode thickness after 50 cycles with respect to the thickness average (average value of 5 samples) was calculated.

The basic charging and discharging conditions were as follows.

- Charging Conditions: constant current (CC)/constant voltage (CV) (0.01 V/0.01 C, current cut-off)

- Discharging Conditions: constant current (CC) condition 1.5V cut off

Discharge capacity (mAh/g) and initial efficiency (%) were derived from the results of the first charging and discharging cycle. Specifically, the initial efficiency (%) was derived by the following equation.

- Initial efficiency (%) = (discharge capacity for **first** discharging period/charge capacity for **first** charging period) × 100

The capacity retention rate and the electrode thickness change rate were derived by the following calculations, respectively.

- Capacity retention rate (%) = (49th discharge capacity / 1st discharge capacity) × 100

- Electrode thickness change rate (%) = (electrode thickness change after 50th cycle/electrode thickness after second charging cycle) × 100

[Table 1]

|  | Electrode thickness change rate (%) | Discharge capacity (mAh/g) | Initial efficiency (%) | Capacity retention rate (%, cycles) |
|---|---|---|---|---|
| Example 1 | 0.75 | 1340 | 86.9 | 93.6 |
| Comparative Example 1 | - | 1210 | 86.4 | - |

According to Table 1, the anode active material according to Example 1 exhibits better discharge capacity and initial efficiency than the anode active material according to Comparative Example 1 using a silicon carbon composite.

<Experimental Example 4>

Batteries using each of the anode active material including the secondary silicon composite according to Example 1 and the and active material according to Comparative Example 1 were manufactured. Specifically, anodes including the anode active materials, respectively, were prepared, and cathodes using NCM 111 as a cathode material were prepared. Here, the anodes were manufactured to have a rolling density of 1.565 g/cc, a current density of 2.95 mA/cm$^2$, and an electrode plate capacity of 511 mAh/g. The cathodes were manufactured top have a current density of 2.65 mA/Cm$^2$, a rolling density is 1.56 g/cc, and an N/P of 1.10. A binder containing 1.5 wt% of SBR and 1.5 wt% CMC was used. A porous polyethylene separator was interposed between the cathode and the anode. 0.5 wt% of vinylene carbonate was dissolved in a mixed solution in which methyl ethyl carbonate (EMC) and ethylene carbonate (EC) were mixed in a volume ratio of 7: 3. A lithium coin half-cell was prepared by injecting an electrolyte in which LiPF$_6$ was dissolved in a concentration of 1M.

The charging conditions of the lithium secondary battery were CC/CV, 0.5 C charging, 4.2 V/0.05 C cutoff, and the discharging conditions were CC, 1.0 C discharging, and 2.85 V cutoff. The capacity retention rates were measured twice for each. The results are shown in FIG. 5.

Referring to FIG. 5 below, the difference in the initial efficiency value is large as the number of cycles increases. The higher the initial efficiency, the greater the amount of cathode material used when manufacturing a secondary battery of the same capacity, which affects the cost increase. Therefore, it is essential to use a high-efficiency anode material.

As described above, it was verified that the anode active material made of the secondary silicon composite according to the present invention has high efficiency and excellent lifespan characteristics.

**Claims**

1. An anode active material comprising: a primary silicon composite formed by dispersing silicon nanoparticles on a first amorphous carbon matrix; and a secondary silicon composite formed by assembling the primary silicon composite on a second amorphous carbon matrix by using a network of conductive fibers.

2. The anode active material of claim 1, wherein the silicon nanoparticles are amorphous silicon nanoparticles having an average particle size of 10 to 200 nm, crystalline silicon nanoparticles having a crystal size that is larger than 0 nm and is not larger than 30 nm, or both.

3. The anode active material of claim 1, wherein the primary silicon composite has an average particle size of 0.2 to 1.3 $\mu$m.

4. The anode active material of claim 1, wherein the secondary silicon composite has an average particle size of 1 to 80 $\mu$m.

5. The anode active material of claim 1, wherein the network of the conductive fibers at least partially come into contact with the primary silicon composite to form an electrical conduction path.

6. The anode active material of claim 1, wherein the network of the conductive fibers is at least partially exposed on a surface of the secondary silicon composite.

7. The anode active material of claim 1, wherein the conductive fiber is at least one selected from the group consisting of graphene, carbon fiber, carbon nanotube, conductive polymer fiber, and metal filament.

8. The anode active material of claim 1, wherein the conductivity of the second amorphous carbon is higher than the conductivity of the first amorphous carbon.

9. A method of preparing an anode active material, the method comprising: preparing a primary silicon composite by mixing a first amorphous carbon precursor and silicon nanoparticles and performing primary heat treatment; preparing a secondary silicon composite by mixing the primary silicon composite, a second amorphous carbon precursor, and conductive fibers and performing secondary heat treatment so that the primary silicon composite is assembled by a network of the conductive fibers to form the secondary silicon composite.

10. The method of claim 9, wherein the first amorphous carbon precursor is added in an amount of 50 to 200 parts by weight per 100 parts by weight of the silicon nanoparticles.

11. The method of claim 9, wherein the second amorphous carbon precursor is added in an amount of 50 to 200 parts by weight per 100 parts by weight of the silicon nanoparticles.

12. The method of claim 9, wherein the conductive fibers are added in an amount of 20 to 80 parts by weight per 100 parts by weight of the silicon nanoparticles.

13. The method of claim 9, wherein the primary heat treatment and the secondary heat treatment are performed in a temperature range of 800°C to 1200°C for a duration of 1 to 3 hours

14. A lithium secondary battery comprising the anode active material of claim 1.

FIG. 1

FIG. 2

50.0um

FIG. 3

FIG. 4

FIG. 5

FIG. 6

<div align="center">

**INTERNATIONAL SEARCH REPORT**

</div>

| | |
|---|---|
| | International application No. |
| | **PCT/KR2019/014403** |

**A. CLASSIFICATION OF SUBJECT MATTER**

*H01M 4/36(2006.01)i, H01M 4/38(2006.01)i, H01M 4/62(2006.01)i, H01M 4/587(2010.01)i, H01M 10/052(2010.01)i, C01B 33/02(2006.01)i, C01B 32/05(2017.01)i*

According to International Patent Classification (IPC) or to both national classification and IPC

**B. FIELDS SEARCHED**

Minimum documentation searched (classification system followed by classification symbols)

H01M 4/36; C01B 32/168; H01M 10/052; H01M 10/0525; H01M 4/38; H01M 4/587; H01M 4/62; C01B 33/02; C01B 32/05

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & Keywords: amorphous carbon, matrix, silicon, conductive fiber, composite

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0063620 A (KNU-INDUSTRY COOPERATION FOUNDATION) 10 June 2015 See abstract; claims 1-5, 25 and 26; paragraphs [0015], [0030], [0067]-[0073], [0138] and [0148]; and figures 1 and 6-9. | 1-14 |
| Y | JP 6183361 B2 (NEC CORPORATION) 23 August 2017 See claims 1, 2 and 9; paragraph [0017]; and figure 1. | 1-14 |
| Y | JP 2012-169259 A (INDUSTRIAL TECHNOLOGY RESEARCH INSTITUTE) 06 September 2012 See claim 1; and figure 1. | 6 |
| Y | KR 10-2018-0036456 A (SAMSUNG ELECTRONICS CO., LTD. et al.) 09 April 2018 See abstract; and claims 1, 9-12, 18, 19 and 21. | 1-14 |
| A | KR 10-1927414 B1 (SAMSUNG ELECTRONICS CO., LTD.) 10 December 2018 See entire document. | 1-14 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 JULY 2020 (15.07.2020) | **15 JULY 2020 (15.07.2020)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/014403**

| Patent document cited in search report | Publication date | Patent family member | Publication date |
|---|---|---|---|
| KR 10-2015-0063620 A | 10/06/2015 | KR 10-2114044 B1 | 25/05/2020 |
| JP 6183361 B2 | 23/08/2017 | US 2015-0132655 A1 | 14/05/2015 |
| | | US 2016-0276671 A1 | 22/09/2016 |
| | | US 9373846 B2 | 21/06/2016 |
| | | US 9843045 B2 | 12/12/2017 |
| | | WO 2013-183187 A1 | 12/12/2013 |
| JP 2012-169259 A | 06/09/2012 | CN 102569805 A | 11/07/2012 |
| | | CN 102569805 B | 01/07/2015 |
| | | JP 5679957 B2 | 04/03/2015 |
| | | TW 201228077 A | 01/07/2012 |
| | | TW I407620 B | 01/09/2013 |
| | | US 2012-0164531 A1 | 28/06/2012 |
| | | US 9040198 B2 | 26/05/2015 |
| KR 10-2018-0036456 A | 09/04/2018 | US 10622631 B2 | 14/04/2020 |
| | | US 2018-0097229 A1 | 05/04/2018 |
| KR 10-1927414 B1 | 10/12/2018 | KR 10-2018-0117583 A | 29/10/2018 |

Form PCT/ISA/210 (patent family annex) (January 2015)